(19) Europäisches Patentamt

European Patent Office

Office européen des brevets

(11) EP 3 306 285 A1

(12) EUROPEAN PATENT APPLICATION

(43) Date of publication:
11.04.2018 Bulletin 2018/15

(51) Int Cl.:
G01H 11/06 (2006.01)    G04D 7/00 (2006.01)
G10K 11/00 (2006.01)

(21) Application number: 16192604.3

(22) Date of filing: 06.10.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: IAV Engineering SARL
1295 Tannay (CH)

(72) Inventors:
• CHRITIN, Vincent
01170 Cessy (FR)
• VAN LANCKER, Eric
1290 Chavannes-des-Bois (CH)

(74) Representative: Stolmár & Partner Intellectual
Property GmbH
rue du Cendrier 15
CP 1489
1201 Genève (CH)

(54) **DEVICE FOR MEASURING VIBRATION AND/OR ACOUSTIC EMISSION OF SMALL OBJECTS**

(57) The present invention relates to a measuring device (2000) for measuring vibration and/or sound of an object, the measuring device comprising a plurality of sensing elements (2101-2106), the plurality of sensing elements (2101-2106) comprising: a first movement sensing element (2101) for sensing movement in a first direction, and a second movement sensing element (2102) for sensing movement in a second direction, wherein the first direction and the second direction are configured such that, when projected together on three orthogonal axes (X, Y, Z), they result in a projection value different from zero on each of the three orthogonal axes (X, Y, Z).

Fig. 2A

Printed by Jouve, 75001 PARIS (FR)

**Description**

**Field of the invention**

The present invention relates to a device for measuring movement and/or deformation, such as vibrations, and/or acoustic emission of an object. Even more specifically, the invention relates to a measuring device which allows movement and/or sound to be measured at the same time along different directions, thereby allowing an improved analysis of the object under measurement.

**State of the art**

Measuring vibrations from an object can be, in some cases, the only possible way of measuring the internal characteristics of an enclosed mechanism. This is, for instance, often the case for watches, electric motors, medical devices such as implantable pumps, etc. The presence of the vibrations, or their characteristics in terms of frequency, amplitude and phase, can for instance indicate the presence of defects in the assembled product.

For instance, it is often interesting to measure the characteristics of a watch mechanism within its enclosed casing, as this is the environment in which the mechanism will operate. However, in those conditions, it is not possible to see the various components of the mechanism. Even in the case of watches having a partially transparent casing, several components are impossible to be seen as they are hidden from the view by being placed below other components. One possible way for analyzing the characteristics of the components within the watch mechanism consists in measuring the vibrations of the watch.

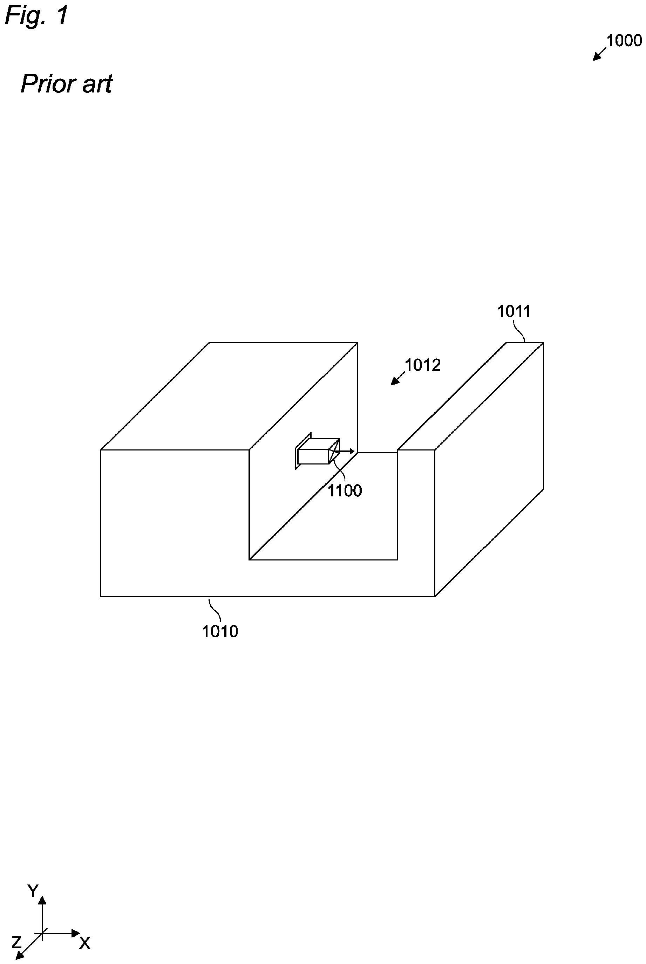

Measuring devices have been developed for this task, one example of which is provided in figure 1.

Measuring device 1000 comprises a frame 1010 which is shaped so as to define a volume 1012. An object to be measured, for instance a watch, can be placed in the volume 1012, between a blocking element 1011 and a sensing element 1100. The sensing element 1100, for instance an accelerometer or a piezoelectric sensor, is biased by a spring toward the direction of the blocking element 1011, as indicated by the arrow in the drawing. In this manner the sensing element 1100 is put in contact with the object to be measured so as to measure the vibrations of the object.

The measuring device 1000, however, presents several problems.

By positioning the object to be measured against blocking element 1011, parts of the vibrations of the object are absorbed by the blocking element 1011. Similarly, as the object is usually supported by the cavity defining the volume 1012, for instance by positioning the object on the bottom part of the frame 1010, part of the vibrations are also absorbed by the frame 1010. Even further, since the sensing element 1100 is capable of being moved along a single direction, in the drawing the direction parallel to the X axis, only the vibrations along this direction will be measured by the measuring device 1000, thereby providing only a very limited analysis of the complete vibrational power of the object.

In general, the measuring device 1000 can therefore only provide a very limited analysis of the vibrations of the object to be measured. In those cases where the vibrations have small intensity and/or are directed in a direction perpendicular to the X axis, no meaningful analysis can be performed at all.

Moreover, also if a two-dimensional or three-dimensional sensor is used as sensing element 1100, the analysis is still very limited. This is due to the fact that the sensing element 1100 only touches the object at a single point. Vibrations can, in some cases, induce a deformation of the object and not a translational movement of the object. In these cases, it is possible that the movement at the point of contact of sensing element 1100 is zero, due to the deformation having a local zero at that point. For instance, if the vibration is on the Y axis, the point at which the sensing element 1100 touches the object may not move, while the extremities of the object in the Y direction move due to a deformation of the object.

**Object of the invention**

It would therefore be advantageous to provide a device which can realize a better vibration analysis of an object to be measured.

It is therefore an object of the invention to provide a measuring device which is capable of measuring vibrations of an object in an improved manner. In particular, it is an object to allow the measurement and/or estimation of the total vibrational power of the object under measurement.

It is a further object of the invention to provide a measuring device which can also measure sound emitted from the object. This adds valuable information to the analysis, as the combination of sound and vibration provides a clearer picture of the internal operation of the object. In this manner it is also possible to determine the effective acoustic radiation of the object.

An additional object of the invention is to provide a measuring device which can measure the vibration and the sound at the same time, so as to allow an improved analysis of the vibro-acoustic behavior of the object under measurement.

## Summary of the invention

One or more of the above mentioned objects are achieved by the invention defined by independent claim 1. The dependent claims further define advantageous aspect of the invention.

In general, the inventors have realized that, by measuring vibrations at the same time along more than one direction, it is possible to provide a better profile of the vibration of the object under measurement. Moreover, this allows to mechanically support the object, so as to avoid the absorption of vibrations by some fixed components.

Even more specifically, by avoiding contact with fixed elements it is possible to avoid dampening of the vibrations. Moreover, by measuring along more than one direction, it is possible to measure, or estimate from the measurement, the total vibrational power of the object under measurement.

Moreover, the inventors have realized that by measuring the vibrations and the sound emitted from the object at the same time, those two analysis can be integrated so as to obtain a better analysis of the behavior of the object.

Additionally, by measuring the sound in different directions around the object under measurement, it is possible to measure, or estimate from the measurement, the total acoustic power of the object under measurement.

One embodiment of the invention can in particular relate to a measuring device for measuring vibration and/or sound of an object, the measuring device can comprise a plurality of sensing elements, the plurality of sensing elements can comprise: a first movement sensing element for sensing movement in a first direction, and a second movement sensing element for sensing movement in a second direction, wherein the first direction and the second direction can be configured such that, when projected together on three orthogonal axes, they result in a projection value different from zero on each of the three orthogonal axes.

Thanks to this approach it is advantageously possible to measure vibration and/or sound of the object in the three dimensions. Moreover, this can be achieved without employing a three-dimensional sensing element, as each of the sensing elements can be one-dimensional, so as to have a better precision. Still further, the presence of at least two sensing elements allows the object to be hold in place by them, thereby avoiding the dumping effect present in the state of the art.

In a further advantageous embodiment of the invention, the plurality of sensing elements can further comprise: a third movement sensing element for sensing movement in a third direction, and/or a fourth movement sensing element for sensing movement in a fourth direction, and/or a fifth movement sensing element for sensing movement in a fifth direction, and/or a sixth movement sensing element for sensing movement in a sixth direction, wherein the third direction, the fourth direction, the fifth direction and the sixth direction can be configured such that, when projected on three orthogonal axes together with the first direction and the second direction, they result in a projection value different from zero on all three orthogonal axes.

Thanks to this approach it is advantageously possible to increase the precision in the measurement by increasing the number of sensing elements. It is also possible to hold the object in a more stable way, advantageously allowing the measuring device, and thereby also the measured object, to be rotated in any direction in space.

In a further advantageous embodiment of the invention, the first direction can correspond to the fourth direction, and/or the second direction can correspond to the fifth direction, and/or the third direction can correspond to the sixth direction.

Thanks to this approach it is advantageously possible to use more than one sensing elements per direction, thereby increasing the measurement precision. Also, this allows the requirements on the spring constant of each sensing element to be less strict than in the presence of a single sensor on a given direction.

In a further advantageous embodiment of the invention, the first direction, the second direction and the third direction can be perpendicular to each other.

Thanks to this approach it is advantageously possible to simplify the data processing.

In a further advantageous embodiment of the invention, the first movement sensing element and the fourth movement sensing element can be positioned on opposite sides of a measurement position for the object, the second movement sensing element and the fifth movement sensing element can be positioned on opposite sides of the measurement position, the third movement sensing element and the sixth movement sensing element can be positioned on opposite sides of the measurement position.

Thanks to this approach it is advantageously possible to hold the object in a more stable way. Moreover, this also allows the requirements on the spring constant of each sensing element to be less strict than in the presence of a single sensor on a given direction.

In a further advantageous embodiment of the invention, at least one movement sensing element of the plurality of sensing elements can comprise: an elastic element, and a movement sensor connected to the elastic element.

Thanks to this approach it is advantageously possible to ensure that the movement sensor follows the movement of the portion of the object to be measured which is in contact with the sensor.

In a further advantageous embodiment of the invention, the movement sensor can be an accelerometer or a piezoelectric sensor.

Thanks to this approach it is advantageously possible to reliably realize the sensor.

In a further advantageous embodiment of the invention, an elastic constant of the elastic element can be configured so that the elastic element can accelerate the movement sensor at least to a value corresponding to a maximum acceleration value of the object due to the vibration to be measured.

Thanks to this approach it is advantageously possible to ensure that the sensor reliably tracks the movement of the object.

In a further advantageous embodiment of the invention, the plurality of sensing elements can further comprise a plurality of sound sensing elements for sensing sound emitted from the object.

Thanks to this approach it is advantageously possible to provide a better analysis of the behavior of the object.

In a further advantageous embodiment of the invention, each of the plurality of sound sensing elements can comprise a sound sensor, the sound sensors of the plurality of sound sensing elements can be substantially positioned on the surface of a spherical region.

Thanks to this approach it is advantageously possible to compute the total acoustic power emitted by the object to be measured.

In a further advantageous embodiment of the invention, the first movement sensing element can further comprise a first sound sensor, and/or the second movement sensing element can further comprise a second sound sensor.

Thanks to this approach it is advantageously possible to combine part of the components of the movement sensing element and of the sound sensing elements.

In a further advantageous embodiment of the invention, the measuring device can further comprise a frame for supporting the plurality of sensing elements, the frame can comprise: a plurality of vertical beams, a plurality of horizontal beams, at least one stability beam.

Thanks to this approach it is advantageously possible to obtain a reliable yet simple to manufacture frame. Furthermore, the frame can be rotated in space and positioned on a working plane in a stable manner.

In a further advantageous embodiment of the invention, the plurality of vertical beams can be disposed in a vertical plane, the plurality of horizontal beams can be disposed in a horizontal plane, the at least one stability beam can be disposed in a stability plane which substantially perpendicular to both the horizontal plane and the vertical plane.

Thanks to this approach it is advantageously possible to obtain a reliable yet simple to manufacture frame. Furthermore, the frame can be rotated in space and positioned on a working plane in a stable manner.

In a further advantageous embodiment of the invention, at least one beam among the plurality of vertical beams, the plurality of horizontal beams and the stability beam can have a cross-section which minimizes sound reflection toward a measurement position for the object.

Thanks to this approach it is advantageously possible to reduce the sound reflection toward the object to be measured, which increases the precision and reliability of the measure of the acoustic power of the object, since mostly sound from the object is measured and not the reflection.

In a further advantageous embodiment of the invention, the at least one beam can have a cross-section which is substantially elongated along the direction from the at least one beam to the measurement position.

Thanks to this approach it is advantageously possible to obtain a stable and reliable frame, while at the same time limiting the amount of sound reflection toward the object to be measured.

**Brief description of the drawings**

The invention will be better understood with reference to the drawings which are provided so as to schematically illustrate various parts of the invention.

It will be understood that the drawings are not intended as technical drawings and are therefore not necessarily illustrated to scale. In particular, some components may have been exaggerated in the drawings for the purpose of better clarifying their positioning and/or shape, so as to allow a better understanding of the invention.

It will further be understood that the invention is not limited to the illustrated embodiments, which are provided so as to allow a better understanding of the invention and not so as to limit the physical implementation of the invention to the illustrated embodiments.

Moreover, it will be understood that some components which may be necessary for the actual implementation of the invention, such as screws, cables and others, may have not been illustrated so as to avoid complicating the drawings, with the purpose of providing a better understanding of the invention. It will be clear, however, that the skilled person can add and implement those components as needed.

In the drawings, the same reference numerals relate to the same components.

Figure 1A schematically illustrates a perspective view of a measuring device 1000 according to the prior art.

Figure 2A schematically illustrates a perspective view of a measuring device 2000.

Figure 2B schematically illustrates a perspective view of movement sensing elements 2101-2106 of figure 2A.

Figure 3 schematically illustrates a cross-sectional view of one movement sensing element 2101 of figure 2A.

Figure 4A schematically illustrates a perspective view of a measuring device 4000.

Figure 4B schematically illustrates a perspective view of sound sensing elements 4101-4112 of figure 4A.

Figures 4C schematically illustrates a side view of the positioning of the sound sensors of the sound sensing elements 4101-4112 of figure 4A.

Figures 4D schematically illustrates a top view of the positioning of the sound sensors of the sound sensing elements 4101-4112 of figure 4A.

Figure 5 schematically illustrates a cross-sectional view of one sound sensing element 4101 of figure 4A.

Figure 6 schematically illustrates a perspective view of a measuring device 6000.

Figure 7 schematically illustrates a cross-sectional view of one movement and sound sensing element 6101 of figure 6.

Figure 8 schematically illustrates various cross-sectional views of a beam 2205A, 2205B, 2205C.

## Detailed description of the drawings

The invention will now be described with reference to the drawings. It will be clear that the specifically described embodiments are for understanding of the invention, which is not limited to the specific implementations described below.

Moreover, several embodiments will be described separately, for the purpose of separately clarifying different features of the invention. It will be clear, however, that those separate embodiments can be combined, so as to result in yet further embodiments of the invention.

Still further, when an embodiment comprises several features, it will be clear that also only some of those features can be sufficient for implementing an embodiment of the invention. Moreover, in some cases, only some of the features from one embodiment can be combined with only some other features from other embodiments, so as to result in yet further embodiments of the invention. That is, it is not necessary, when combining more embodiments, to combine all features from all embodiments.

In general, it will be understood by those skilled in the art how the various features described below can be considered independently or combined, so as to result in embodiments of the invention, which is defined by the claims.

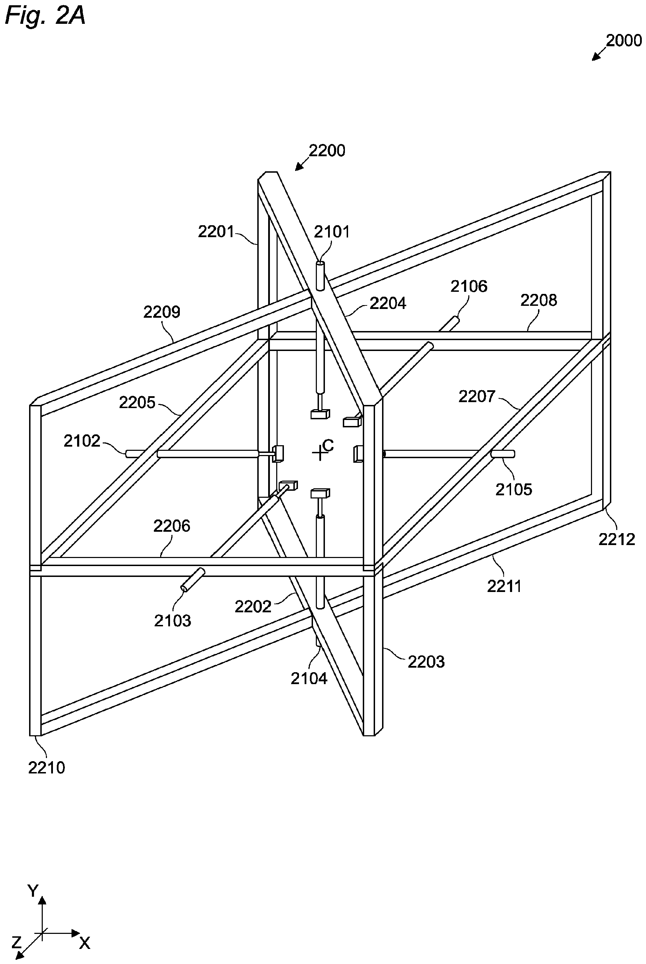

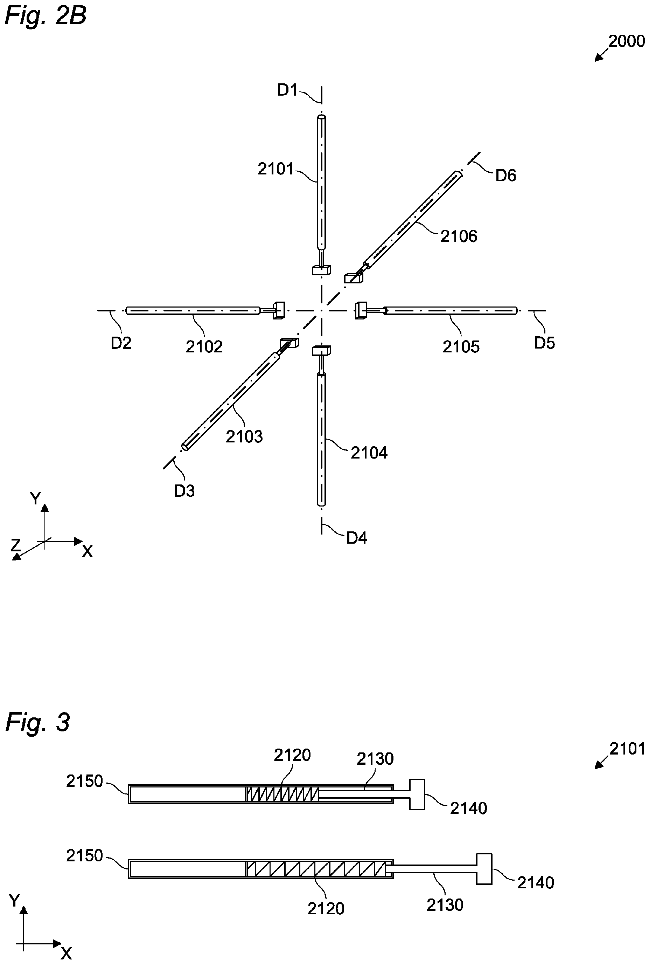

Figure 2A schematically illustrates a perspective view of a measuring device 2000. Figure 2B schematically illustrates a perspective view of movement sensing elements 2101-2106 of figure 2A.

In particular, figure 2A schematically illustrates a measuring device 2000 comprising six movement sensing element 2101-2106. As will be described below, it is not necessary that all six illustrated sensing elements 2101-2106 are implemented, in order to carry out the invention.

Each of the movement sensing element 2101-2106 is capable of measuring movement along a certain direction D1-D6, illustrated in figure 2B. When an object to be measured is positioned between the movement sensing elements 2101-2106, substantially in correspondence with the point C, it is therefore possible to measure movements along different directions at the same time. This provides the beneficial advantage that vibrations, or more generally movement, of the object is not measured along a single direction, such as in the case of the prior art, but can be measured at the same time in more than one direction.

It is therefore possible to obtain a better vibrational profile of the object. In particular, it is possible to determine the vibration amount along more than one direction. In particular, by allowing a measurement along the three orthogonal axes X, Y and Z, it is possible to measure, or estimate, the total vibrational power of the device under measurement.

Additionally, the positioning of the movement sensing element 2101-2106 advantageously allows the object to be measured to be kept in place only by the movement sensing elements 2101-2106. This avoids contact of the object to a fix element, such as blocking element 1011 of the prior art. In this manner, it is advantageously possible to avoid vibrations to be absorbed by some fixed component of the measuring device. This, in turn, results in a better measurement of the vibrations, or more generally movement, of the object to be measured, as those are not damped by the measuring device 2000.

In the illustrated embodiment, six movement sensing elements 2101-2106 are represented, each along a direction D1-D6, respectively. Even more specifically, in the illustrated embodiment, the directions D1 and D4 are substantially parallel to each other, the directions D2 and D5 are substantially parallel to each other, and the directions D3 and D6 are substantially parallel to each other. Further, in the illustrated embodiments, the directions D1, D2 and D3 are each substantially perpendicular to each other. Here, the term substantially means that the various directions are parallel or perpendicular to each other with an error of less than 30 degrees, preferably less than 15 degrees, even more preferably less than 5 degrees.

This specific implementation provides several advantages.

Firstly, the data collected by the movement sensing elements 2101-2106 can be directly assigned to three different axes in space, which are orthogonal to each other. For instance, with reference to the illustrated embodiment, movement along directions D1 and D4 corresponds to movement in the Y axis, movement along directions D2 and D5 corresponds to movement in the X axis while movement along directions D3 and D6 correspond to movement in the Z axis. This simplifies the subsequent data processing of the movement measured by the measuring device 2000.

Moreover, by placing the movement sensing elements 2101-2106 as described, it is possible to advantageously improve how the object to be measured is hold in place by the movement sensing elements 2101-2106, independently on the orientation of the measuring device 2000.

In particular, the object to be measured can be placed at a position C, where the object can be maintained in place independently on the orientation in space of the measuring device 2000. This is particularly advantageous in all of those cases in which the object has to be measured while being placed in different orientations in space. For instance, this is a common requirement in the watchmaking industry in which mechanical movements have to be tested while being kept in different positions in space.

Moreover, in the illustrated embodiment, two movement sensing elements are placed on opposite sides of point C, where the object to be measured is placed. This allows to combine their output, so as to evaluate the movement of the object along a single direction. For instance, with reference to the illustrated embodiment, the signal measured by movement sensing element 2101 and 2104 can be combined so as to evaluate the movement along the direction D1, substantially corresponding to the direction D4. The combination of the two signals allows a more precise measurement to be obtained. Moreover, this implementation increases reliability as a measurement can be performed only in presence of a malfunctioning movement sensing element.

The above description has been referred to the specifically illustrated embodiment including six movement sensing elements 2101-2106. However, the present invention is not limited to this implementation.

In particular, the invention can be implemented with any number of movement sensing elements equal to or higher than two. In the following some examples will be provided on how at least some of the above-mentioned advantages can be obtained with a number of movement sensing elements smaller than six.

In order to measure movement in the three axes X, Y and Z, it is sufficient for at least two directions, for instance D1 and D2 to be configured such that, when projected on the three orthogonal axes X, Y and Z, they result in a projection value different from zero on all three orthogonal axes X, Y and Z. This can be better understood with reference to the following example. By defining the axes

$$X = (1, 0, 0)$$

$$Y = (0, 1, 0)$$

$$Z = (0, 0, 1)$$

it is possible to measure vibrations on all three axes by means of two movement sensing elements 2101 and 2102 positioned along directions D1 and D2 defined as

$$D1 = (1, 1, 0)$$

$$D2 = (1, 1, 1)$$

In this manner, by a simple geometrical analysis, which will be clear to those skilled in the art, from the signal measured by movement sensing elements 2101 and 2102 it is possible to obtain the movement values along the X, Y and Z axes. This is because the directions D1 and D2 provide a combined projection on all exes which is different from zero, namely

$$\text{projection on } X = (1)$$

$$\text{projection on } Y = (1)$$

$$\text{projection on } Z = (1)$$

Since directions D1 and D2 as defined above have a projection on the X, Y and Z axis, when the object under measurement moves in any direction in space, it will be possible to evaluate independently the X, Y and Z movement by a simple geometrical transformation.

As another exemplary implementation using less than six movement sensing elements, the following configuration

$$D1 = (1, 1, 0)$$

$$D2 = (0, 1, 1)$$

$$D3 = (1, 0, 1)$$

allows a rather stable holding of the object, while still fulfilling the requirement of the projection of the movement sensing elements 2101-2103 to be different from 0 on all three orthogonal axes X, Y and Z.

The specific embodiment illustrated in figures 2A and 2B, in which

$$D1 = D4 = (0, 1, 0)$$

$$D2 = D5 = (1, 0, 0)$$

$$D3 = D6 = (0, 0, 1)$$

is therefore only one of many possible implementations. In addition to the advantages described with respect to the implementation above having only two movement sensing elements 2101 and 2102, by adding movement sensing elements it is possible to simplify the data analysis, since no geometrical transformation of the collected data is needed.

Figure 3 schematically illustrates a cross-sectional view of one movement sensing element 2101, as an example of any of movement sensing elements 2101-2106.

As can be seen in figure 3, the movement sensing element 2101 comprises a frame 2150, which provides structural stability to the movement sensing element 2101. Moreover, the frame 2150 allows the movement sensing element to be fixed to a frame 2200 of the measuring device 2000, which will be described below. Still further, the movement sensing element 2101 comprises an elastic element 2120 connected to a stem 2130. At the other end of the stem 2130, a movement sensor 2140 is positioned.

Thanks to this arrangement, it can be seen in figure 3, the stem 2130 can travel through the frame 2150 under the bias of the elastic element 2120 and under the bias of the force exerted by the object to be measured. This allows the movement sensor 2140 to be movable along the traveling direction of the stem 2130. In this manner, the movement sensor 2140 can measure movement along at least the direction of movement. With reference, for instance to the embodiment illustrated in figure 3, the movement sensor 2140 can measure movement along the X axis.

The elastic element 2120 can be any element capable of providing an elastic force. For instance, a coil spring or a pneumatic spring can be used. The stem 2130 can be implemented by any fixed component which allows a connection between the elastic element 2120 and the movement sensor 2140 and does not necessarily have to be realized with the proportions illustrated in figure 3. The movement sensor 2140 can be any device capable of recording movement in at least one direction. For instance, an accelerometer or or a piezoelectric sensor can be used, however the invention is not limited thereto and any device capable of detecting or signaling its position in space, or its acceleration and/or speed, can be used.

In some embodiments, the travelling length of the stem 2130 can be approximately 40mm +/- 20mm. This allows the positioning of several different objects within the space defined by the plurality of movement sensors 2140, without having to rearrange the movement sensing elements 2101-2106 within frame 2200 to accommodate for smaller or larger objects.

In some embodiments, an elastic constant of the elastic element 2120 is configured so that the elastic element can accelerate the movement sensor 2140 at least to a value corresponding to a maximum acceleration value of the object to be measured. For instance with respect to the situation illustrated in figure 3, when the object to be measured moves from left to right, if the elastic element 2120 can ensure that the movement sensor 2140 accelerates fast enough so as to follow the object to be measured, movement of the object to be measured can be precisely measured. In other words, by ensuring that the movement sensor 2140 can move faster than the object to be measured, it can be ensured that the movement sensor 2140 will remain permanently in contact with the object to be measured and thus precisely record the movements of the object.

However, the present invention is not limited thereto. In particular, if it cannot be ensured that the movement sensor 2140 will move fast enough to follow the object to be measured, the position of the object to be measured, and/or its speed can still be precisely tracked by using two movement sensing elements. This could be the case, for instance, when the requirement for the elastic constant would result in a too high pressure applied on the object, thus resulting in dampening of the vibrations. Even in the case where the elastic constant cannot ensure that movement sensor 2140 will move fast enough to follow the object, the present invention can reliably perform by using two movement sensors 2140, one on each side of the object to be measured.

For instance, referring to the movement measurement along directions D2 and D5, the situation can be imagined of an object to be measured which is oscillating along the X axis. When moving from the point C toward the left, this will cause a movement of movement sensor 2140 of movement sensing element 2102. Even if movement sensor 2140 of movement sensing element 2105 cannot follow fast enough, the data collected by movement sensor 2140 of movement sensing element 2102 will provide a precise evaluation of the movement and/or of the speed of the object to be measured. Subsequently, when the object to be measured moves from the left to the right, a symmetrical situation arises, in which the data collected by movement sensor 2140 of movement sensing element 2105 can be used so as to precisely track the movement of the object to be measured, even if the movement sensor 2140 of movement sensing element 2102 is not fast enough to follow the object to be measured.

That is, even if the elastic constant is high enough so as to allow the movement sensor 2140 to follow the acceleration of the object to be measured, the present invention is not limited thereto since, by using more than one movement sensing element 2101-2106 per direction, this drawback can be advantageously overcome. This flexibility in the choice of the value of the elastic constant of the elastic element 2120 allows the measuring device 2120 to be used for the measurement of a wide range of objects, having different vibration characteristics, contrary to the case of the prior art.

Although the embodiments above have been described with all movement sensing elements 2101-2106 comprising a movement sensor 2140, the present invention is not limited thereto. In some embodiments, some of the movement sensing elements 2101-2106 may be implemented without a movement sensor 2140.

For instance, again with reference to an object oscillating along the X axis, it is possible to provide only one of the two movement sensing elements 2102 and 2105 with a movement sensor 2140. This is, for instance, particularly advantageous in those cases in which only one movement sensor 2140 from movement sensing elements 2102 and 2105 can follow precisely the positioning of the object to be measured by having a elastic constant of the elastic element 2120 high enough so as to precisely track the position of the object to be measured, as described above.

More specifically, if the movement sensor 2140 of movement sensing element 2102 can precisely track of the movement of the object to be measured in the direction from right to left and in the direction from left to right, it may not be necessary to provide the movement sensing element 2105 with a movement sensor 2114. In this case, the movement sensing element 2105 may only be provided with the elastic element 2120 and with the stem 2130 so as to guarantee support for the object to be measured, while reducing the cost and the complexity of the measuring device 2000.

Measuring device 2000 further comprises a frame 2200 so as to allow the positioning in space of the movement sensing elements 2101-2106, which will be described below. It will be noted that this is only one potential implementation and the frame 2200 can be realized with different shapes as long as they allow the positioning of the movement sensing elements as described above.

In the specifically illustrated embodiment, the frame 2200 comprises four horizontal beams 2201-2204, four vertical beams 2205-2208 and four stability beams 2209-2212. This implementation is particularly advantageous as it allows the positioning of the frame 2200 in six different orientations in space. This advantageously allows measuring the object in different orientations in space without having to move the object itself with respect to the movement sensing elements 2101-2106, but simply by moving the measuring device 2000.

In the specifically illustrated embodiment, several of the beams 2201-2212 are provided with a hole for the passage of a respective movement sensing element 2101-2106. Each of the movement sensing elements 2101-2106 can be inserted into the respective hole and fixed by means of a fixing screw, not illustrated in the drawings. However, the connection of the movement sensing element 2101-2106 to the respective beam is not limited to such implementation. In general, any manner of fixing the movement sensing elements 2101-2106 two any of the beams 2201-2212 can be implemented as long as it allows the movement sensing element to be connected in a substantially stable manner to the frame 2200.

Moreover, in the specifically illustrated embodiment, the part of the frame 2150 of each of the movement sensing elements 2101-2106 opposite to the movement sensor 2140 is illustrated as extending outside of the respective supporting beam. This has been illustrated so as to clarify that the movement sensing elements 2101-2106 can be inserted through the respective beam. However, the present invention is not limited thereto. For instance, each of the frames 2150 could be flush with the side face of the respective beam so as to advantageously avoid oscillations of the frame 2200 when the frame 2200 is placed such that its bottom side comprises one of the movement sensing elements 2101-2106. For instance, with respect to the illustration of figure 2A, the movement sensing element 2104 could be flush with the side faces of beams 2211 and 2202 so as to avoid oscillations of the frame 2000.

In some embodiments, the frame 2200 can have a dimension of approximately 200mm along each axe X, Y and Z. This allows a large number of objects to be tested within measuring device 2000, as well as allowing the user to easily position those objects at point C, by having dimensions sufficient for hand-placement of the object.

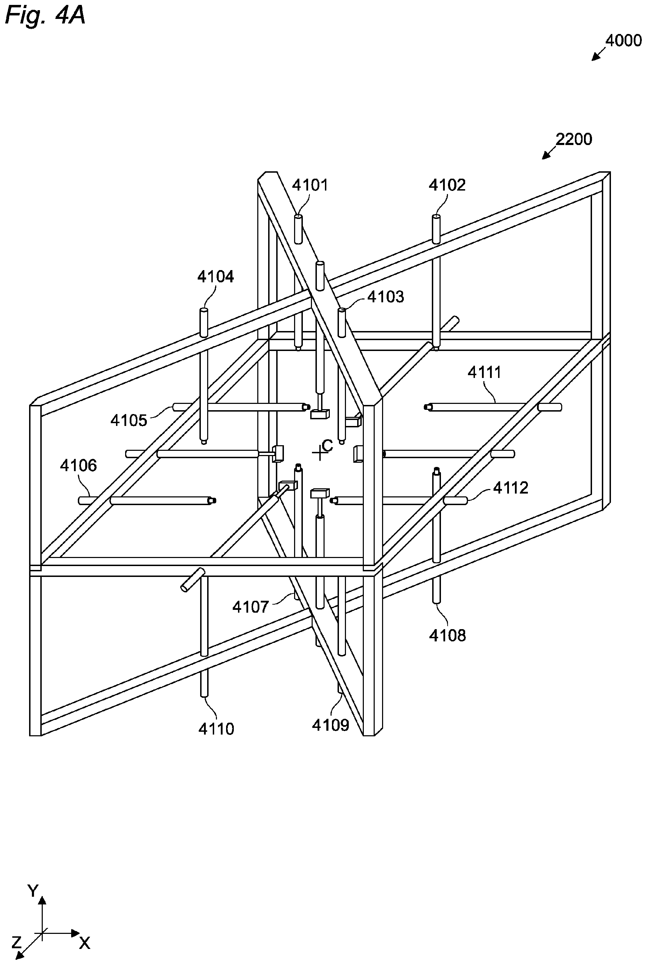

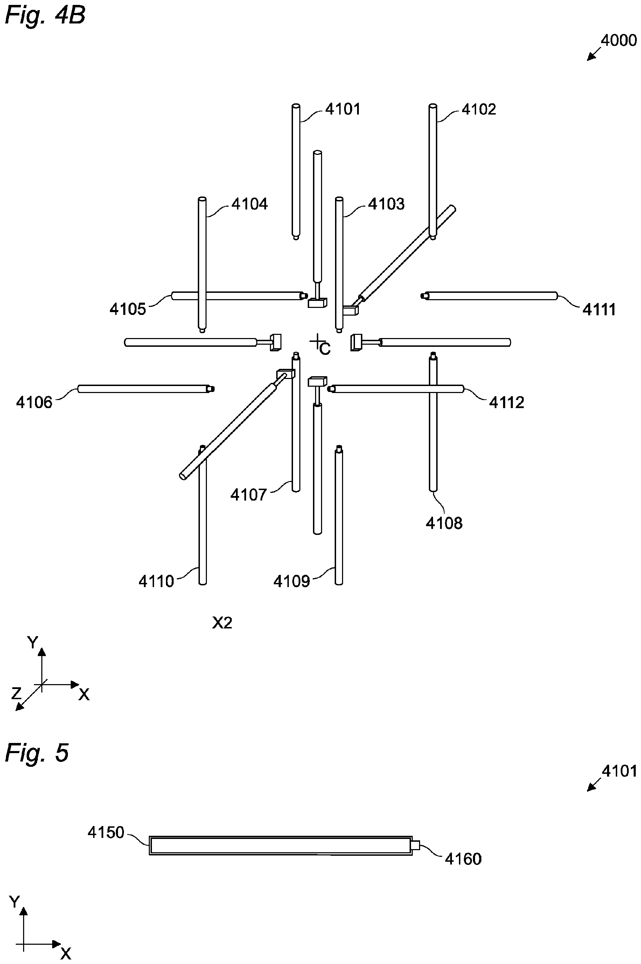

Figure 4A schematically illustrates a perspective view of a measuring device 4000. Measuring device 4000 differs from measuring device 2000 due to the additional presence of sound sensing elements 4101-4112. Figure 4B schematically illustrates a perspective view of sound sensing elements 4101-4112 of figure 4A.

As can be seen in figures 4A and 4B, the sound sensing elements 4101-4112 advantageously make use of the frame 2000 to which they are connected in a manner similar to that already described for the movement sensing elements 2101-2106. In the illustrated embodiment, the number of sound sensing elements 4101-4112 is 12. However, the present invention is not limited thereto and any number of sound sensing elements can be implemented. It will be understood that by increasing the number of sound sensing elements the precision of the sound measurement of the object to be measured will increase.

In general, the measuring device 4000 therefore differs from measuring device 2000 in that it allows the sound emitted by the object to be measured to be recorded, alternatively, or in addition to, the recorded movement of the object to be measured. The combined analysis of the movements, or of the vibration, together with the sound emitted by the object allows a more detailed analysis of the internal operation of the object. Moreover, by placing the sound sensing element 4101 - 4102 in the space around the object, it is possible to record sound from different position thereby allowing a more detailed analysis of the origin of the sound and thus permitting a deeper analysis of the object to be measured.

The positioning, as well as the number, of the sound sensing elements 4101-4112 is flexible. As for the number, any number of sound sensing elements 4101-4112 can be implemented and the illustrated embodiment with 12 sound sensing elements 4101-4112 is only one possible implementation. As for the placement, any placement of the sound sensing elements 4101-4112 can be implemented. In general, however, it will be preferred to place the sound sensing element 4101-4112 substantially equally spaced from each other around the object to be measured, or around point C illustrated in figures 4A and 4B, which represents the ideal measurement position. Such equal spacing allows sound to be recorded from different directions thereby improving the sensibility of the measuring device 4000. Moreover, by placing the sound sensing element 4101-4112 in this manner it is possible to determine, or estimate, the total acoustic power of the object to be measured.

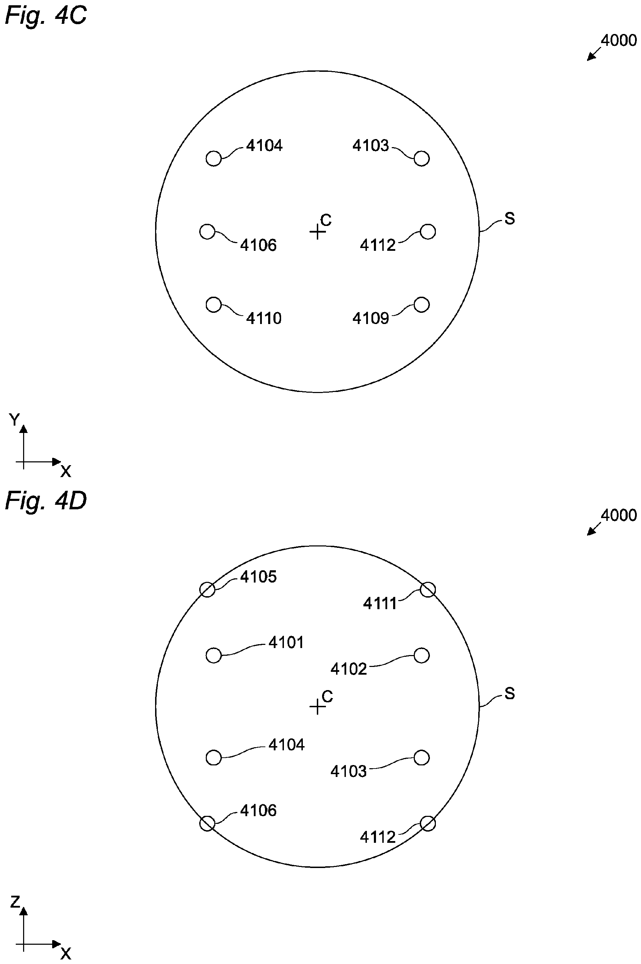

One more specific and advantageous placement of the sound sensing element 4101-4112 will be described below with reference to figures 4C and 4D.

Figure 4C schematically illustrates a side view of the positioning of the sound sensors of the sound sensing elements 4101-4112 of figure 4A. Figure 4D schematically illustrates a top view of the positioning of the sound sensors of the sound sensing elements 4101-4112 of figure 4A. In particular, in those figures, each of the points 4101-4112 schematically represents the position in space of the sound sensor 4160 of the respective sound sensing element 4101-4112. It will be further understood that, those sound sensing elements which are not referenced in figures 4C and 4D are not visible as they are placed behind another sound sensing element. For instance, sound sensing elements 4101 and 4102 are placed behind sound sensing element 4104 and 4103, respectively, and therefore not visible in the side view of figure 4C.

As can be seen in figures 4C and 4D, the sound sensors 4160 of the plurality of sound sensing elements 4101-4112 are substantially placed on the surface of a spherical region S. In particular, it will be understood that, due to the two-dimensional projection of their three-dimensional placement, some of the indicated positions in figures 4C and 4D are not overlapping the projection of the spherical region S. For instance, the position of sound sensor 4160 of sound sensing elements 4106 in figure 4C is not positioned on the projection of the spherical region S. However, as visible in figure 4D, it is positioned on the projection of the spherical region S here, as the position in the Y plane of the sound sensing element 4106 correspond to the maximum extension of the spherical region S, when device 4000 is seen from above. The spherical region S is centered in point C. In some embodiments, the spherical region S has a radius of 100mm +/- 50mm. This allows a close placement of the sound sensing elements to the object to be measured while still allowing an easy reach of point C, so that positioning and removing of the object to be measured can be easily carried out.

The substantially spherical positioning of the sound sensors 4160 of the various sound sensing elements allows a measurement of the total acoustic power of the object under measurement, without the data treatment that would be necessary if the sounds sensors 4160 were positioned at difference distances from point C, or from the object to be measured. This simplify the data analysis from measuring device 4000.

Figure 5 schematically illustrates a cross-sectional view of one sound sensing element 4101 of figure 4A, as an example for any of sound sensing elements 4101-4112.

Generally speaking, the sound sensing element 4101 can be implemented by any device capable of measuring sound, such as a microphone. In the specifically illustrated embodiment, the sound sensing element 4101 comprises a frame 4150 for providing a structural support to the sound sensing element 4101 and for connecting it to the frame 2200 of the measuring device 4000. Moreover, the sound sensing device 4101 comprises a sound sensor 4160 for measuring sound. It will be understood that the sound sensor 4160 can be anything from a complete microphone, eventually comprising the amplification circuitry, to something as simple as a microphone membrane, while leaving the related measuring and/or amplification electronic outside of measuring device 4000.

The specifically illustrated shape of sound sensing element 4101 is particularly advantageous as it reduces the surface facing the object to be measured and therefore also the echo which would be cause by such surface.

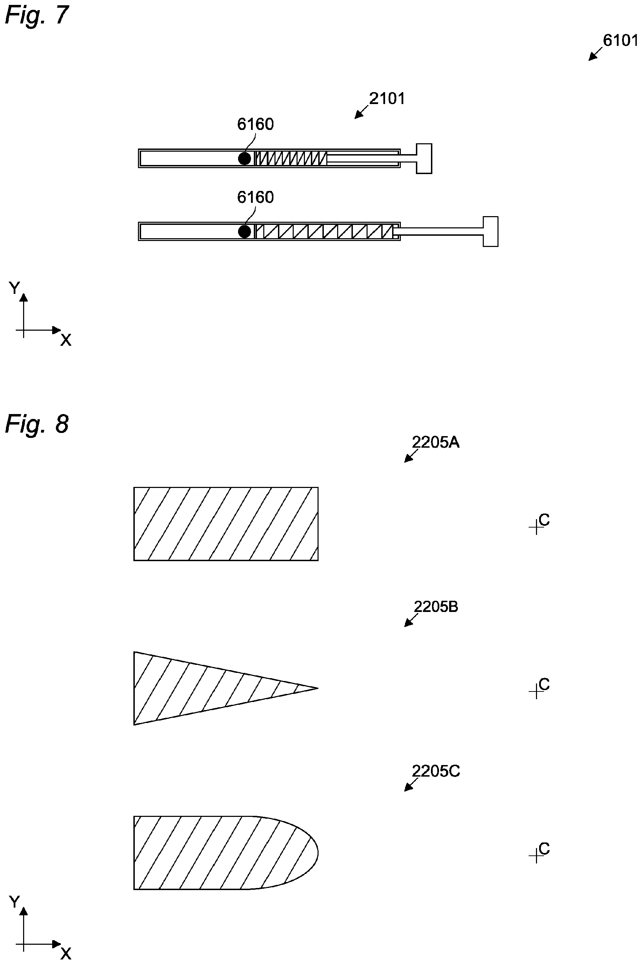

Figure 8 schematically illustrates various cross-sectional views of a beam 2205A, 2205B, 2205C as an example possible implementations for any of the beams 2201-2212.

As can be seen, all implementations share the general approach of having a cross-section which minimizes sound reflection toward the measurement position for the object, indicated by point C. This provides the beneficial advantage that the echo due to the beams 2201-2212 is reduced to a minimum, thereby increasing the reliability of the sound measurement.

Even more specifically, beam 2205A has a substantially rectangular cross section in which the shorter side of the rectangle is facing point C. Beam 2205B has a substantially triangular cross section in which the triangle has one of its tips tapering toward point C. Beam 2205C has a substantially rounded and convex side facing point C.

It will be understood that several different shapes can be implemented with the aim of reducing such echo toward point C. In general, the implementations here illustrated as an example have a cross-section which is substantially elongated along the direction from the beam 2205 toward the measurement position C. In this manner, structural stability of the beam can be ensured, while at the same time reducing the surface creating echo toward point C.

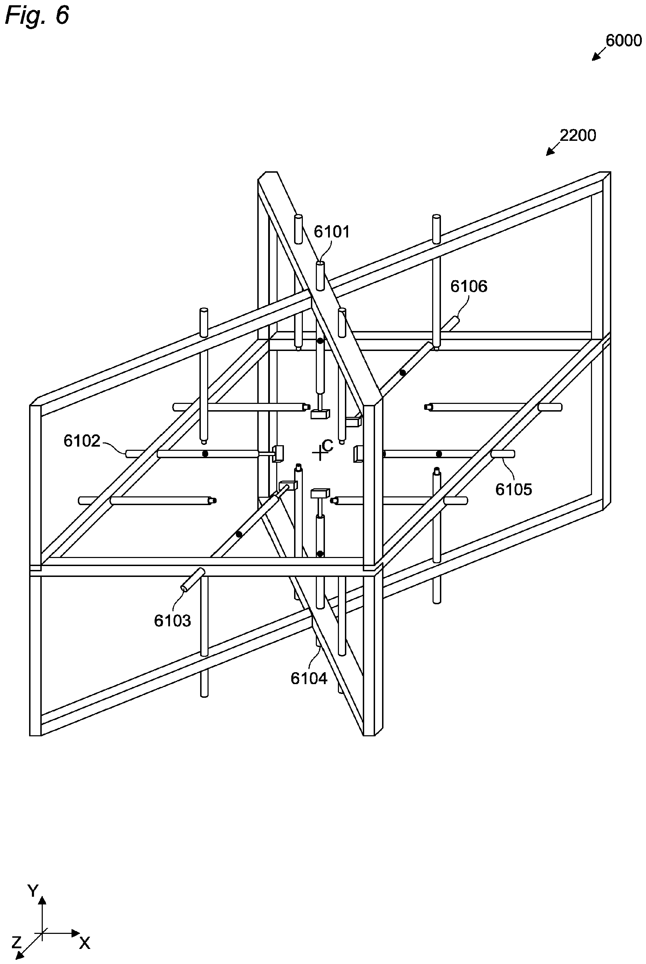

Figure 6 schematically illustrates a perspective view of a measuring device 6000. Measuring device 6000 differs from measuring device 4000 in that movement sensing elements 2101-2106 are replaced by movement and sound sensing elements 6101-6106.

Figure 7 schematically illustrates a cross-sectional view of one movement and sound sensing element 6101 of figure 6, as an example of any of movement and sound sensing elements 6101-6106. As can be seen, the movement and sound sensing element 6101 basically corresponds to movement sensing element 2101 with the addition of a sound sensors 6160, substantially similar to sound sensor 4160.

This allows the single sensing element 3101 to measure to both movement and sound at the same time, without increasing the echo cause by the sensing element 6101 compared to the sensing element 2101. This is furthermore advantageous as it allows the precision of the sound measurement by the measuring device 6000 to be increased.

It will be understood that sound sensors 6160 can be also advantageously placed on the spherical surface S previously described with reference to the sound sensors 4160, providing similar advantages as those previously described.

**List of reference numerals**

| | |
|---|---|
| 1000: | measuring device |
| 1010: | frame |
| 1011: | blocking element |
| 1012: | volume |
| 1100: | sensing element |
| 2000: | measuring device |
| 2101-2106: | movement sensing element |
| 2120: | elastic element |
| 2130: | stem |
| 2140: | movement sensor |
| 2150: | frame |
| 2200: | frame |
| 2201-2204: | horizontal beam |
| 2205-2208: | vertical beam |
| 2205A, 2205B, 2205C: | beam |
| 2209-2212: | stability beam |
| 4000: | measuring device |
| 4101-4112: | sound sensing element |
| 4150: | frame |
| 4160: | sound sensor |
| 6000: | measuring device |
| 6101-6106: | movement and sound sensing element |
| 6160: | sound sensor |
| C: | measurement position |
| D1-D6: | direction |
| S: | spherical region |

**Claims**

1. A measuring device (2000, 4000, 6000) for measuring vibration and/or sound of an object, the measuring device comprising a plurality of sensing elements (2101-2106, 4101-4112), the plurality of sensing elements (2101-2106) comprising:

   a first movement sensing element (2101) for sensing movement in a first direction (D1), and
   a second movement sensing element (2102) for sensing movement in a second direction (D2),

   wherein the first direction (D1) and the second direction (D2) are configured such that, when projected together on three orthogonal axes (X, Y, Z), they result in a projection value different from zero on each of the three orthogonal axes (X, Y, Z).

2. The measuring device according to claim 1, wherein the plurality of sensing elements (2101-2106) further comprises:

   a third movement sensing element (2103) for sensing movement in a third direction (D3), and/or
   a fourth movement sensing element (2104) for sensing movement in a fourth direction (D4), and/or
   a fifth movement sensing element (2105) for sensing movement in a fifth direction (D5), and/or
   a sixth movement sensing element (2106) for sensing movement in a sixth direction (D6),

   wherein the third direction (D3), the fourth direction (D4), the fifth direction (D5) and the sixth direction (D6) are configured such that, when projected on three orthogonal axes (X, Y, Z) together with the first direction (D1) and the second direction (D2), they result in a projection value different from zero on all three orthogonal axes (X, Y, Z).

3. The measuring device according to claim 2, wherein

   the first direction (D1) corresponds to the fourth direction (D4), and/or
   the second direction (D2) corresponds to the fifth direction (D5), and/or
   the third direction (D3) corresponds to the sixth direction (D6).

**4.** The measuring device according to claim 3, wherein

the first direction (D1), the second direction (D2) and the third direction (D3) are perpendicular to each other.

**5.** The measuring device according to any of claims 2 to 4, wherein

the first movement sensing element (2101) and the fourth movement sensing element (2104) are positioned on opposite sides of a measurement position (C) for the object,
the second movement sensing element (2102) and the fifth movement sensing element (2105) are positioned on opposite sides of the measurement position (C),
the third movement sensing element (2103) and the sixth movement sensing element (2106) are positioned on opposite sides of the measurement position (C).

**6.** The measuring device according to any previous claim, wherein at least one movement sensing element of the plurality of sensing elements (2101-2106) comprises:

an elastic element (2120), and
a movement sensor (2140) connected to the elastic element (2120).

**7.** The measuring device according to claim 6, wherein

the movement sensor (2140) is an accelerometer or a piezoelectric sensor.

**8.** The measuring device according to claim 6 or 7, wherein

an elastic constant of the elastic element (2120) is configured so that the elastic element can accelerate the movement sensor (2140) at least to a value corresponding to a maximum acceleration value of the object due to the vibration to be measured.

**9.** The measuring device according to any previous claim, wherein

the plurality of sensing elements (2101-2106, 4101-4112) further comprises a plurality of sound sensing elements (4101-4112) for sensing sound emitted from the object.

**10.** The measuring device according to claim 9, wherein

each of the plurality of sound sensing elements (4101-4112) comprises a sound sensor (4160),
the sound sensors (4160) of the plurality of sound sensing elements (4101-4112) are substantially positioned on the surface of a spherical region (S).

**11.** The measuring device according to any previous claim, wherein

the first movement sensing element (2101) further comprises a first sound sensor (6160), and/or
the second movement sensing element (2102) further comprises a second sound sensor (6160)..

**12.** The measuring device according to any previous claim, further comprising a frame (2200) for supporting the plurality of sensing elements (2101-2106, 4101-4112), the frame comprising:

a plurality of vertical beams (2201-2204),
a plurality of horizontal beams (2205-2208),
at least one stability beam (2209-2212).

**13.** The measuring device according to claim 12, wherein
the plurality of vertical beams (2201-2204) are disposed in a vertical plane,
the plurality of horizontal beams (2205-2208) are disposed in a horizontal plane,
the at least one stability beam (2209-2212) is disposed in a stability plane which substantially perpendicular to both the horizontal plane and the vertical plane.

**14.** The measuring device according to claim 12 or 13, wherein

at least one beam among the plurality of vertical beams (2201-2204), the plurality of horizontal beams (2205-2208) and the stability beam (2209-2212) has a cross-section which minimizes sound reflection toward a measurement position (C) for the object.

**15.** The measuring device according to claim 14, wherein

the at least one beam has a cross-section which is substantially elongated along the direction from the at least one beam to the measurement position (C).

# Fig. 1

## Prior art

1000

1011

1012

1100

1010

Y

Z    X

*Fig. 2A*

*Fig. 2B*

2000

D1

2101

D6

2106

D2          2102

2105          D5

2103

D3          2104          D4

Y
Z   X

*Fig. 3*

2101

2150          2120          2130
2140

2150          2120          2130
2140

Y
X

*Fig. 4A*

*Fig. 4B*

4000

4101

4102

4104

4103

4105

4111

4106

4112

4107

4108

4110

4109

X2

Y
Z  X

*Fig. 5*

4101

4150

4160

Y
X

Fig. 4C

4000

Fig. 4D

4000

*Fig. 6*

*Fig. 7*

6101

2101

6160

6160

Y

X

*Fig. 8*

2205A

C

2205B

C

2205C

C

Y

X

Europäisches
Patentamt

European
Patent Office

Office européen
des brevets

## EUROPEAN SEARCH REPORT

Application Number

EP 16 19 2604

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/116059 A1 (GAN LIVNE [IL] ET AL) 13 May 2010 (2010-05-13) * paragraphs [0002], [0003], [0042], [0057] - [0067], [0074], [0096] - [0098]; figures 1,6 * | 1-11 | INV. G01H11/06 G04D7/00 G10K11/00 |
| X | US 4 775 960 A (STARON PHILIPPE [FR] ET AL) 4 October 1988 (1988-10-04) * columns 1,3,4; figure 1 * | 1,2,6-8, 12,13 | |
| X | US 2011/033062 A1 (DENG KEN K [US]) 10 February 2011 (2011-02-10) * figures 5,6,9,12,13 * | 1-8 | |
| A | FR 3 033 654 A1 (LEPSI SARL [CH]) 16 September 2016 (2016-09-16) * pages 1,6-14 * * page 17; figures 1-2,5-8 * | 1-15 | |

TECHNICAL FIELDS
SEARCHED (IPC)

G01H
B06B
G10K
G04D
G01N

The present search report has been drawn up for all claims

| Place of search | Date of completion of the search | Examiner |
|---|---|---|
| The Hague | 9 March 2017 | Bream, Philip |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 2604

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2017

| Patent document cited in search report | | Publication date | Patent family member(s) | | Publication date |
|---|---|---|---|---|---|
| US 2010116059 | A1 | 13-05-2010 | NONE | | |
| US 4775960 | A | 04-10-1988 | CA | 1275724 C | 30-10-1990 |
| | | | FR | 2592157 A1 | 26-06-1987 |
| | | | GB | 2184544 A | 24-06-1987 |
| | | | IT | 1217308 B | 22-03-1990 |
| | | | NL | 8603191 A | 16-07-1987 |
| | | | NO | 865115 A | 22-06-1987 |
| | | | OA | 8453 A | 30-06-1988 |
| | | | US | 4775960 A | 04-10-1988 |
| US 2011033062 | A1 | 10-02-2011 | CN | 102472660 A | 23-05-2012 |
| | | | EP | 2462414 A1 | 13-06-2012 |
| | | | US | 2011033062 A1 | 10-02-2011 |
| | | | WO | 2011017208 A1 | 10-02-2011 |
| FR 3033654 | A1 | 16-09-2016 | NONE | | |

EPO FORM P0459

For more details about this annex : see Official Journal of the European Patent Office, No. 12/82